(19) Europäisches Patentamt / European Patent Office / Office européen des brevets

(11) **EP 3 917 978 B1**

(12) **EUROPEAN PATENT SPECIFICATION**

(45) Date of publication and mention
of the grant of the patent:
**13.12.2023 Bulletin 2023/50**

(21) Application number: **20701785.6**

(22) Date of filing: **30.01.2020**

(51) International Patent Classification (IPC):
**C08F 210/06** (2006.01)   **C08L 23/14** (2006.01)

(52) Cooperative Patent Classification (CPC):
(C-Sets available)
**C08F 210/06; C08L 23/14;** C08L 2205/025   (Cont.)

(86) International application number:
**PCT/EP2020/052231**

(87) International publication number:
**WO 2020/157170 (06.08.2020 Gazette 2020/32)**

(54) **POLYPROPYLENE COMPOSITION**

POLYPROPYLENZUSAMMENSETZUNG

COMPOSITION DE POLYPROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2019 EP 19155049**

(43) Date of publication of application:
**08.12.2021 Bulletin 2021/49**

(73) Proprietor: **Borealis AG**
**1020 Vienna (AT)**

(72) Inventors:
• **BORAGNO, Luca**
  **4021 Linz (AT)**
• **BERGER, Friedrich**
  **4021 Linz (AT)**
• **POMAKHINA, Elena**
  **4021 Linz (AT)**

(74) Representative: **Maiwald GmbH**
**Elisenhof**
**Elisenstraße 3**
**80335 München (DE)**

(56) References cited:
EP-A1- 3 261 838       EP-A1- 3 447 088
WO-A1-2018/069263   US-A1- 2001 000 254
US-A1- 2016 312 018   US-A1- 2018 155 475

(52) Cooperative Patent Classification (CPC): (Cont.)

C-Sets
**C08F 210/06, C08F 2/001;**
**C08F 210/06, C08F 4/6465;**
**C08L 23/14, C08L 23/0815;**
C08F 210/06, C08F 210/08, C08F 210/16,
C08F 2500/05, C08F 2500/06, C08F 2500/12,
C08F 2500/26

C-Sets

**Description**

The present invention is related to a new polypropylene composition, which combines low sealing initiation temperature (SIT), high melting temperature, good processability and good optical properties, like low haze.

The present invention is furthermore related to the use of the polypropylene composition and articles made therefrom.

Propylene homopolymer and copolymers are suitable for many applications such as packaging, textile, automotive and pipe. An important area of application of propylene polymers is the packaging industry, particularly in film application where sealing properties play an important role, e.g., heat sealing.

Heat sealing is the predominant method of manufacturing flexible and semi-rigid packages. Important characteristics of good sealing performance are:

a) low seal initiation temperature (SIT), which is needed to support high speed on packaging machines with low energy consumption,

b) broad sealing window, which is especially needed for processing window on HFFS (Horizontal Form, Fill and Seal) packaging lines
and

c) additionally high melting point, which is important, for example in biaxially oriented PP (BOPP) films, to avoid stickiness and blocking and accomplish high BOPP line speeds.

To ensure fast sealing, a low SIT is of advantage. By operating at lower temperature there is the benefit that the article to be sealed is not exposed to high temperatures. There are also economic advantages since lower temperatures are of course cheaper to generate and maintain.

There are further advantages by avoiding high sealing temperatures, especially when temperature sensitive goods are to be packed.

Particularly demanding applications of films, like form and fill packaging require, besides low seal initiation temperature, good hot-tack properties. Hot-tack is the bonding strength measurable while the polymer in the heat sealed portion of a film is in a semi-molten/solidifying state.

This bonding strength is expressed here and hereafter in the hot tack force (N) needed to tear apart sealed layers. The hot-tack is generally an important factor to improve the efficiency of a packaging production process.

Additionally, it is also desired to have a packaging material with satisfying optical properties, such as low haze.

For use of such films in the food packaging area it is furthermore desirable that the xylene cold soluble (XCS) fraction of the material is limited to below 35.0 wt% and that the material contains no phthalate containing substances.

All film manufacturers, whether making multilayer or monolayer films are looking to maximise the properties of the film it produces. Maximisation of properties is normally easier with multilayer films as each layer can be tailored to provide a particular attribute of need. It is common for example to use an outer layer which can give rise to good sealing properties whilst a core layer might be used to provide mechanical strength to a film. Moreover, when using a multilayer construction, incompatibility between film components can be avoided by placing these in separate layers.

When a film is mono-layered however, the options available to the film manufacturer are much more limited. It is currently very difficult to prepare monolayer films having optimal properties, e.g. good mechanical and processing properties and the person skilled in the art is therefore looking for new films which can provide improvements to these. Especially problematic are optical properties as the more components used in a monolayer film, the higher the haze value of the film tends to be.

The problem faced by the film manufacturer is that by trying to improving one property, another equally important property tends to be detrimentally affected. There are also real problems of compatibility between different polymers in a monolayer construction where all components are extruded together as a blend. If polymer components are not compatible, inhomogeneity is evident in the formed film which is unacceptable for the manufacturer and consumer. This limits still further the parameters which the film chemist can manipulate.

Several attempts have been made to solve the problems mentioned above.

US 20050142367 proposes to use a blend of a propylene-1-butene-ethylene terpolymer with a metallocene catalyzed ethylene polymer for a heat sealable skin layer of a three-layer BOPP film to provide low seal initiation temperature (SIT) and good hot-tack properties. The metallocene catalyzed ethylene polymer can have a melt flow rate (MFR$_2$; 190°C, 2.16 kg) in the range of from 2.0 to 7.5 g/10 min and a density in the range of from 0.878 to 0.900 g/cm$^3$.

The propylene-1-butene-ethylene terpolymer used in the examples contains a relatively high amount of comonomers, namely 1.1 wt% (i.e. 1.7 mol%) of ethylene and 20.0 wt% (i.e. 16.2 mol%) of 1-butene.

The melting point of such compositions, as well as stiffness will be by far too low. Optical properties, like haze, are not mentioned.

WO 2016091923 discloses films based on a blend of a propylene copolymer and an ethylene based plastomer with sealing initiation temperature (SIT) of at most 140°C. The Examples shown in WO 2016091923 use propylene-ethylene copolymers and ethylene based plastomer with a melt flow rate (MFR$_2$; 190°C, 2.16 kg) up to 10.0 g/10 min. The films prepared with these blends after surface treatment using a Corona Generator G20S show a sealing initiation temperature (SIT) at which the seal strength has reached 1.5 N in the range of from 127°C to 138°C. This is by far too high.

No values for hot-tack and haze are indicated.

Also EP 3031849 discloses films based on a blend of a propylene copolymer and an ethylene based plastomer, the films having a haze according to ASTM D1003 for a film thickness of 50 $\mu$m of at most 2.0%.

The examples shown in EP 3031849 use propylene-ethylene copolymers and ethylene based plastomer with a melt flow rate (MFR$_2$; 190°C, 2.16 kg) up to 10.0 g/10 min, the films are again after surface treated using a Corona Generator G20S.

No values for hot-tack and sealing initiation temperature (SIT) are indicated, but based on the compositions shown in the examples, SIT is expected to be by far too high (>130°C).

EP 3 447 088 discloses a polypropylene composition said to combine low sealing initiation temperature (SIT), high hot-tack and good optical properties, like low haze.

US 2001/000254 relates to polypropylene resin composition said to bring about a non-stretched film superior in transparency, impact resistance, low temperature heat-sealability and in the strength of heat-sealing, which composition comprises (A) a polypropylene resin, (B) a specific ethylene/alpha-olefin random copolymer and (C) a specific propylene/ethylene/1-butene random copolymer.

WO 2018/069263 describes a polymer composition comprising a propylene/ ethylene/ C$_4$ to C$_{10}$ $\alpha$-olefin ($\alpha$O) terpolymer, which is said to have improved toughness.

EP 3 261 838 discloses laminated film structures comprising one first film being laminated to a second film and whereby the laminated film structures are based on polyethylene only, i.e. polymers other than polyethylene are substantially absent, and wherein the first film is an MDO film, which can be down-gauged to a film thickness below 30 $\mu$m.

US 2016/312018 relates to a process for producing a polypropylene terpolymer composition by polymerizing propylene with ethylene and C$_4$ to C$_8$ $\alpha$-olefin monomers in a sequential polymerization process with at least two reactors connected in series in the presence of solid Ziegler-Natta catalyst having a surface area below 20 m$^2$/g.

US 2018/155475 describes a process for producing a polypropylene polymer composition by polymerizing propylene with a C$_4$ to C$_8$ $\alpha$-olefin comonomer and ethylene in a sequential polymerization process with at least two reactors connected in series in the presence of a solid Ziegler-Natta catalyst component being free of external carrier material and any phthalic compounds, and wherein the C$_4$ to C$_8$ $\alpha$-olefin comonomer content in the propylene polymer composition is at least 4.5 wt-%.

However, although much development work has already been done in the field of films suitable for different kinds of packaging, the films as disclosed in the prior art still do not provide a sufficient balance of low sealing initiation temperature (SIT) in combination with high melting temperature, good processability and good optical properties, like low haze, so that there still exists a need for novel and improved film structures, providing films with improved sealing behaviour, i.e. having an improved balance between high melting point and low sealing initiation temperature (SIT) thus having a broad sealing window and thermal stability in combination with improved optics..

Surprisingly the inventors found, that the above problems can be solved with the use of a blend comprising a specific propylene terpolymer and an ethylene based plastomer.

**Summary of the Invention**

Accordingly, the present invention relates in a first aspect to a polypropylene composition comprising a blend of

(a) 75.0 to 95.0 wt%, based on the blend, of a random propylene terpolymer comprising

(i) ethylene-derived comonomer units in an amount of from 1.0 to 2.5 wt% and

(ii) comonomer units derived from a C$_4$ to C$_{10}$ $\alpha$-olefin in an amount of from 5.0 to 15.0 wt%, whereby the random propylene terpolymer has an MFR$_2$ determined at 230°C under a load of 2.16kg according to ISO1133 in a range of 0.5 to 20.0 g/10 min, and wherein the random propylene terpolymer is a binary blend comprising two propylene polymer fractions PPF1 and PPF2 in specific amounts:

a') less than or equal to 50.0 wt% of propylene polymer fraction PPF1 being a propylene terpolymer comprising propylene monomers, 0.1 to 1.2 wt% determined by quantitative $^{13}$C{$^1$H} NMR spectroscopy ethylene comonomer and 2.0 to 15.0 wt% determined by quantitative $^{13}$C{$^1$H} NMR spectroscopy of one comonomer selected from C$_4$-C$_{10}$ alpha-olefin and

b') more than or equal to 50.0 wt% of propylene polymer fraction PPF2 being a propylene terpolymer comprising propylene monomers, 1.0 to 3.0 wt% calculated based on quantitative $^{13}$C{$^1$H} NMR spectros-

copy of ethylene comonomer and 2.0 to 15.0 wt% calculated based on quantitative $^{13}C\{^1H\}$ NMR spectroscopy of one comonomer selected from $C_4$-$C_{10}$ alpha-olefin, whereby the terpolymer fraction PPF1 has lower ethylene content than terpolymer fraction PPF2 and

(b) 5.0 to 25.0 wt%, based on the blend, of an ethylene based plastomer having a density according to ISO 1183 of from 0.850 g/cm³ to 0.915 g/cm³ and an $MFR_2$ determined according to ISO 1133 at 190°C under a load of 2.16kg in the range of 2.0 to b 10.0 g/10 min,

and optionally one or more additives in a total amount of from 0.0 up to 5.0 wt%, based on the composition, the amounts of blend (A) and additive(s) sum up to 100 wt% for the composition, wherein the polypropylene composition has

i. a melting temperature (Tm) in the range of > 133 to 160 °C as determined by DSC according to ISO 11357, ii. a sealing initiation temperature (SIT), as measured on a 50μm cast film, in the range of 90 to < 102°C, wherein the sealing initiation temperature (SIT) is determined according to ASTM F1921-12 modified as follows:

  o heat sealing initiation temperature (SIT) is the sealing temperature at which a sealing force of ≥ 5 N is achieved,
  o Specimen width: 25 mm,
  o Sealing pressure: 0.67 N/mm²,
  o Sealing time: 1 sec,
  o Cooling time: 30 sec,
  o Clamp separation rate: 42 mm/sec,
  o Start temperature: 80 °C,
  o End temperature: 150 °C,
  o Sealing temperature interval (Increments): 5 °C,
  o Specimens are sealed A to A at each sealing jaw (sealbar) temperature and seal force is determined at each step, and whereby

iii. Tm and SIT satisfying the equation:
Delta =Tm - SIT, wherein Delta is in the range of 33 to 50 °C.

It has surprisingly been found out that such compositions have an optimized or improved sealing behaviour, i.e. low sealing initiation temperature SIT and high melting temperature, in combination with beneficial optical properties.

In an embodiment of the present invention the propylene terpolymer (a) is obtainable, preferably obtained, in the presence of a phthalate-free Ziegler-Natta catalyst.

According to the present invention, the propylene terpolymer (a) is a binary blend comprising, preferably consisting of, propylene polymer fraction 1 PPF1 and propylene polymer fraction 2 PPF2, wherein PPF1 and PPF2 are both propylene terpolymers comprising ethylene comonomer and one comonomer selected from $C_4$-$C_{10}$ alpha-olefin in different amounts. In another embodiment the present invention is related to a monolayer film made of the above identified composition.

The present specification further describes the use of the mono-layer films according to the invention for lamination or mono- or multilayer films for packaging films and medical/hygienic films.

The present specification also describes the use of the monolayer films according to the invention as sealing layer in a polypropylene multi-layer film, which can be manufactured either by co-extrusion or lamination.

### Detailed description

In the following the individual components are defined in more detail.

The polypropylene composition of the present inventions comprises a blend of

(a) a propylene terpolymer and
(b) an ethylene based plastomer

### Component (a) random propylene terpolymer

The propylene terpolymer used in the polypropylene composition of the invention is a random terpolymer and comprises at least ethylene as first comonomer and a $C_4$ to $C_{10}$ α-olefin as the second comonomer.

Accordingly, the random propylene terpolymer comprises, preferably consists of, units derived from propylene and from ethylene and from one further α-olefin selected from the group consisting of $C_4$-α-olefin, $C_5$-α-olefin, $C_6$-α-olefin, $C_7$-α-olefin, $C_8$-α-olefin, $C_9$-α-olefin and $C_{10}$-α-olefin.

More preferably the random propylene terpolymer comprises, preferably consists of, units derived from propylene and from ethylene and one other α-olefin selected from the group consisting of 1-butene, 1-pentene, 1-hexene, 1-heptene, 1-octene, 1-nonene and 1-decene, wherein 1-butene and 1- hexene are even more preferred.

It is in particular preferred that the random propylene terpolymer consists of units derived from propylene, ethylene and 1-butene or from propylene, ethylene and 1-hexene.

Most preferred the random propylene terpolymer consists of units derived from propylene, ethylene and 1-butene.

The random propylene terpolymer used in the polypropylene composition according to this invention is featured by a moderate to low comonomer content, especially ethylene comonomer content.

The comonomer content is measured with $^{13}C\{1H\}$ NMR.

Accordingly, the random propylene terpolymer used in the polypropylene composition according to this invention has an ethylene content in the range of from 1.0 to 2.5 wt%, preferably in the range of from 1.2 to 2.2 wt%.

Moreover, the random propylene terpolymer has a $C_4$ to $C_{10}$ α-olefin, preferably a $C_4$ or $C_6$ α-olefin comonomer content in the range of from 5.0 to 15.0 wt%, preferably in the range of from 6.5 to 13.0 wt% and more preferably in the range of from 7.5 to 11.0 wt%.

Preferably the terpolymer has a rather high content of propylene (C3), i.e. at least 86.0 wt%, i.e. equal or more than 86.0 wt%, more preferably equal or more than 87.0 wt%, yet more preferably equal or more than 88.0 wt%.

The random propylene terpolymer has a melt flow rate $MFR_2$ (230°C) measured according to ISO 1133 in the range of from 0.5 to 20.0 g/10min, preferably in the range of from 0.8 to 15.0 g/10 min, more preferably in the range of from 1.0 to 10.0 g/10 min, still more preferably in range of from 2.0 to 8.0 g/10 min and yet more preferably in the range of 3.0 to 7.0 g/10 min.

Alternatively, the random propylene terpolymer can be defined by the xylene cold soluble (XCS) content measured according to ISO 6427. Accordingly, the propylene terpolymer is preferably featured by a xylene cold soluble (XCS) content of below 30.0 wt%, more preferably of below 25.0 wt% and even more preferably of below 20.0wt%.

Thus, it is in particular appreciated that the random propylene terpolymer has a xylene cold soluble (XCS) content in the range of 5.0 to below 30.0 wt%, more preferably in the range of 8.0 to below 25.0 wt% and most preferably in the range of 10.0 to below 20.0 wt%.

Alternatively the random propylene terpolymer can be defined by the melting temperature (Tm) measured via DSC according to ISO 11357. Accordingly, the propylene terpolymer preferably has a melting temperature Tm of equal or higher than 130°C up to 160°C. Even more preferable the melting temperature Tm is in the range of 130°C to 145°C, most preferably in the range of 132°C to 140°C.

The random propylene terpolymer is multimodal, like bimodal in view of the comonomer content distribution and can further be unimodal or multimodal, like bimodal in view of the molecular weight distribution; bimodal propylene terpolymers are preferred.

The multimodal random propylene terpolymer is preferably produced in a sequential polymerization process using different polymerization conditions (amount of comonomer, hydrogen amount, etc.) in the reactors.

According to the present invention, the random propylene terpolymer (a) is a binary blend comprising, preferably consisting of, propylene polymer fraction PPF1 and propylene polymer fraction PPF2.

The propylene polymer fraction PPF1 is present in the polypropylene composition according to the invention in an amount of less than or equal to 50 wt%, preferably in an amount in the range of 25 to 50 wt%, more preferably in an amount in the range of 30 to 50 wt%. The amount of PPF1 being relative to the sum of the propylene polymer fractions PPF1 and PPF2.

The propylene polymer fraction PPF2 is present in the polypropylene composition according to the invention in an amount of more than or equal to 50 wt%, preferably in an amount in the range of 50 to 75 wt%, more preferably in an amount in the range of 50 to 70 wt%. The amount of PPF2 being relative to the sum of the propylene polymer fractions PPF1 and PPF2.

The propylene polymer fraction PPF1 is generally a propylene terpolymer comprising ethylene comonomer and one comonomer selected from $C_4$-$C_{10}$ alpha-olefin, preferably ethylene comonomer and one comonomer selected from $C_4$-$C_8$ alpha olefin comonomer, more preferably ethylene comonomer and one comonomer selected from $C_4$-$C_6$ alpha olefin comonomer, even more preferably ethylene comonomer and 1-butene ($C_4$).

The propylene terpolymer (PPF1) generally has ethylene comonomer units in an amount of 0.1 to 1.2 wt%, preferably in an amount of 0.2 to 1.0 wt% and even more preferably in an amount of from 0.2 to 0.8 wt%. The amount of ethylene comonomer units is relative to the total amount of monomers in the propylene terpolymer (PPF1).

The propylene terpolymer (PPF1) generally has $C_4$-$C_{10}$ alpha-olefin comonomer units in an amount of 2.0 to 15.0 wt%, preferably in an amount of 3.0 to 12.0 wt%, more preferably in an amount of 5.0 to 10.0 wt%. The amount of $C_4$-$C_{10}$ alpha-olefin comonomer units is relative to the total amount of monomers in the propylene terpolymer (PPF1).

Generally, the melt flow rate ($MFR_2$) for the propylene terpolymer (PPF1) is of $\leq$ 10.0 g/10min. The $MFR_2$ for propylene terpolymer (PPF1) is determined according to ISO 1133, at a temperature of 230°C and under a load of 2.16 kg. It is preferred that the $MFR_2$ for the propylene terpolymer (PPF1) is between 2.0 and 10.0 g/10min, more preferably the $MFR_2$ is between 3.0 and 7.0 g/10min.

The propylene polymer fraction PPF2 is generally also a propylene terpolymer comprising ethylene comonomer and one comonomer selected from $C_4$-$C_{10}$ alpha-olefin, preferably ethylene comonomer and one comonomer selected from $C_4$-$C_8$ alpha olefin comonomer, more preferably ethylene comonomer and one comonomer selected from $C_4$-$C_6$ alpha olefin comonomer, even more preferably ethylene comonomer and 1-butene ($C_4$).

The propylene terpolymer (PPF2) generally has ethylene comonomer units in an amount of 1.0 to 3.0 wt%, preferably in an amount of 1.2 to 2.7 wt%, more preferably in an amount of 1.4 to 2.5 wt%. The amount of ethylene comonomer units is relative to the total amount of monomers in the propylene terpolymer (PPF2).

The propylene terpolymer (PPF2) generally has $C_4$-$C_{10}$ alpha-olefin comonomer units in an amount of 2.0 to 15.0 wt%, preferably in an amount of 4.0 to 12.0 wt%, more preferably in an amount of 6.0 to 11.0 wt%. The amount of $C_4$-$C_{10}$ alpha-olefin comonomer units is relative to the total amount of monomers in the propylene terpolymer (PPF2).

In the random propylene terpolymer (a) being a binary blend comprising, preferably consisting of, propylene polymer fraction PPF1 and propylene polymer fraction PPF2, the two terpolymers PPF1 and PPF2 differ especially in their amount of ethylene, i.e. the terpolymer fraction PPF1 has lower ethylene content than the terpolymer fraction PPF2, thus the propylene terpolymer (a) being bimodal in view of ethylene content.

The random propylene terpolymer can be produced by polymerization in the presence of any conventional coordination catalyst system including Ziegler-Natta, chromium and single site (like metallocene catalyst), preferably the propylene terpolymer is produced in the presence of a Ziegler-Natta catalyst system.

The random propylene terpolymer can be produced in a single polymerization step comprising a single polymerization reactor (R1) or in a sequential polymerization process comprising at least two polymerization reactors (R1) and (R2), whereby in the first polymerization reactor (R1) a first propylene polymer fraction (R-PP1) is produced, which is subsequently transferred into the second polymerization reactor (R2). In the second polymerization reactor (R2) a second propylene polymer fraction (R-PP2) is then produced in the presence of the first propylene polymer fraction (R-PP1).

If the propylene terpolymer is produced in at least two polymerization reactors (R1) and (R2), it is possible that in the first reactor (R1) a propylene terpolymer and in the second reactor (R2) a propylene terpolymer is produced, yielding the propylene terpolymer (a).

Polymerization processes which are suitable for producing the propylene terpolymer generally comprises one or two polymerization stages and each stage can be carried out in solution, slurry, fluidized bed, bulk or gas phase.

The term "polymerization reactor" shall indicate that the main polymerization takes place. Thus in case the process consists of one or two polymerization reactors, this definition does not exclude the option that the overall system comprises for instance a pre-polymerization step in a pre-polymerization reactor. The term "consist of" is only a closing formulation in view of the main polymerization reactors.

The term "sequential polymerization process" indicates that the propylene terpolymer is produced in at least two reactors connected in series. Accordingly, such a polymerization system comprises at least a first polymerization reactor (R1) and a second polymerization reactor (R2), and optionally a third polymerization reactor (R3).

Another aspect of the present invention relates to a process for the preparation of the above polypropylene composition, comprising the steps:

(i) preparing component (a), i.e., the random propylene terpolymer by polymerizing propylene, ethylene and a $C_4$ to $C_{10}$ $\alpha$-olefin in the presence of a phthalate free Ziegler-Natta catalyst, wherein said random propylene terpolymer is prepared by a sequential polymerization process comprising at least two reactors connected in series, said process comprising the steps:

a) polymerizing in a first reactor being a slurry reactor propylene, ethylene and one comonomer selected from $C_4$-$C_{10}$ alpha-olefin obtaining a propylene polymer fraction (PPF1), being a propylene terpolymer as defined in claim 1

b) transferring the propylene polymer fraction (PPF1) and unreacted comonomers of the reactor (R-1) into a second reactor (R-2) being a first gas-phase reactor-1 (GPR 1),

c) in the gas-phase reactor-1 (GPR-1) propylene, ethylene and one comonomer selected from $C_4$-$C_{10}$ alpha-olefin are polymerized in the presence of the propylene polymer fraction (PPF1), obtaining a propylene polymer fraction (PPF2), being a propylene terpolymer as defined above, said propylene polymer fraction (PPF2) and the propylene polymer fraction (PPF1) forming the random propylene terpolymer (a),

d) recovering the random propylene terpolymer (a),

(ii) mixing said propylene terpolymer (a) with an ethylene based plastomer (b), optionally in the presence of one or more additives, to obtain a mixture of components (a) and (b), and

(iii) extruding said mixture, to obtain the polypropylene composition comprising the blend (A) of component (a) and (b).

The first, respectively the single, polymerization reactor (R1) is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

In case a "sequential polymerization process" is applied the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol® process of Basell.

The random propylene terpolymer (a) according to this invention is produced in the presence of a phthalate free Ziegler-Natta catalyst.

The Ziegler-Natta catalyst is fed into the first, respectively the single, polymerization reactor (R1) and is optionally transferred with the polymer (slurry) obtained in the first polymerization reactor (R1) into the subsequent reactors, if the propylene terpolymer is produced in a sequential polymerization process.

If the process covers also a pre-polymerization step, it is preferred that all of the Ziegler-Natta catalyst is fed in the pre-polymerization reactor. Subsequently the pre-polymerization product containing the Ziegler-Natta catalyst is transferred into the first, respectively the single, polymerization reactor (R1).

This Ziegler-Natta catalyst can be any stereo-specific Ziegler-Natta catalyst for propylene polymerization, which preferably is capable of catalysing the polymerization and copolymerization of propylene and comonomers at a pressure of 500 to 10000 kPa, in particular 2500 to 8000 kPa, and at a temperature of 40 to 110°C, in particular of 60 to 110°C.

Preferably, the Ziegler-Natta catalyst (ZN-C) comprises a high-yield Ziegler-Natta type catalyst including an internal donor component, which can be used at high polymerization temperatures of 80°C or more.

Such high-yield Ziegler-Natta catalyst (ZN-C) can comprise a succinate, a diether, etc., or mixtures therefrom as internal donor (ID) and are for example commercially available for example from LyondellBasell under the Avant ZN trade name.

Further useful solid catalysts are prepared by emulsion-solidification method, where no external support is needed. The dispersed phase in the form of liquid droplets of the emulsion forms the catalyst part, which is transformed to solid catalyst particles during the solidification step.

A further suitable catalyst for the present invention is a solid Ziegler-Natta catalyst, which comprises compounds of a transition metal of Group 4 to 6 of IUPAC, like titanium, a Group 2 metal compound, like a magnesium, and an internal donor being a non-phthalic compound, more preferably a non-phthalic acid ester, still more preferably being a diester of non-phthalic dicarboxylic acids as described in more detail below. Further, the solid catalyst is free of any external support material, like silica or MgCl2, but the catalyst is self-supported.

This Ziegler-Natta catalyst can be further defined by the way as obtained.

Accordingly, the Ziegler-Natta catalyst is preferably obtained by a process comprising the steps of

a)

a1) providing a solution of at least a Group 2 metal alkoxy compound (Ax) being the reaction product of a Group 2 metal compound and a monohydric alcohol (A) comprising in addition to the hydroxyl moiety at least one ether moiety optionally in an organic liquid reaction medium; or

a2) a solution of at least a Group 2 metal alkoxy compound (Ax') being the reaction product of a Group 2 metal compound and an alcohol mixture of the monohydric alcohol (A) and a monohydric alcohol (B) of formula ROH, optionally in an organic liquid reaction medium; or

a3) providing a solution of a mixture of the Group 2 alkoxy compound (Ax) and a Group 2 metal alkoxy compound (Bx) being the reaction product of a Group 2 metal compound and the monohydric alcohol (B), optionally in an organic liquid reaction medium; or

a4) providing a solution of Group 2 alkoxide of formula M(OR1)n(OR2)mX2-n-m or mixture of Group 2 alkoxides M(OR1)n'X2-n' and M(OR2)m'X2-m', where M is Group 2 metal, X is halogen, R1 and R2 are different alkyl groups with C2 to C16 carbon atoms, and 0 < n < 2, 0 < m < 2 and n+m+(2-n-m) = 2, provided that both n and m ≠ 0, 0 < n' < 2 and 0 < m' < 2; and

> b) adding said solution from step a) to at least one compound of a transition metal of Group 4 to 6 and
> c) obtaining the solid catalyst component particles,

and adding a non-phthalic internal donor, at any step prior to step c).

The internal donor or precursor thereof is added preferably to the solution of step a).

According to the procedure above the Ziegler-Natta catalyst can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound in step b) is carried out and the whole reaction mixture is kept at least at 50°C, more preferably in the temperature range of 55°C to 110°C, more preferably in the range of 70°C to 100°C, to secure full precipitation of the catalyst component in form of a solid particles (step c).

In emulsion - solidification method in step b) the solution of step a) is typically added to the at least one transition metal compound at a lower temperature, such as from -10°C to below 50°C, preferably from -5°C to 30°C. During agitation of the emulsion the temperature is typically kept at -10 to below 40°C, preferably from -5°C to 30°C. Droplets of the dispersed phase of the emulsion form the active catalyst composition. Solidification (step c) of the droplets is suitably carried out by heating the emulsion to a temperature of 70°C to 150°C, preferably to 80°C to 110°C.

The catalyst prepared by emulsion - solidification method is preferably used in the present invention.

In a preferred embodiment in step a) the solution of a2) or a3) are used, i.e. a solution of (Ax') or a solution of a mixture of (Ax) and (Bx).

Preferably the Group 2 metal is magnesium.

The magnesium alkoxy compounds (Ax), (Ax') and (Bx) can be prepared in situ in the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are C2 to C4 glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propyleneglycol-monobutyl ether, 3-butoxy-2-propanol being particularly preferred.

Illustrative monohydric alcohols (B) are of formula ROH, with R being a straight-chain or branched $C_6$-$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different C1-C20 alkyl, preferably C2-C10 alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"(OH)m to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt% solution in a solvent as indicated above. Typical commercially available Mg compound, especially dialkyl magnesium solutions are 20 - 40 wt% solutions in toluene or heptanes.

The reaction for the preparation of the magnesium alkoxy compound may be carried out at a temperature of 40°C to 70°C. Most suitable temperature is selected depending on the Mg compound and alcohol(s) used.

The transition metal compound of Group 4 to 6 is preferably a titanium compound, most preferably a titanium halide, like $TiCl_4$.

The non-phthalic internal donor that can be used in the preparation of the catalyst is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from alpha-olefin polymers of alpha-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 g/m$^2$, more preferably below 10 g/m$^2$. Typically, the amount of Ti is 1 to 6 wt%, Mg 10 to 20 wt% and donor 10 to 40 wt% of the catalyst composition.

Detailed description of preparation of catalysts is disclosed in WO 2012/007430, EP2610271, EP261027 and EP2610272.

The Ziegler-Natta catalyst is optionally modified by the so called BNT-technology during a pre-polymerization step in order to introduce a polymeric nucleating agent.

Such a polymeric nucleating agent is preferably a vinyl polymer, such as a vinyl polymer derived from monomers of the formula

$$CH_2{=}CH{-}CHR^1R^2$$

wherein $R^1$ and $R^2$, together with the carbon atom they are attached to, form an optionally substituted saturated or unsaturated or aromatic ring or a fused ring system, wherein the ring or fused ring moiety contains 4 to 20 carbon atoms, preferably 5 to 12 membered saturated or unsaturated or aromatic ring or a fused ring system or independently represent a linear or branched $C_4$-$C_{30}$-alkane, $C_4$-$C_{20}$-cycloalkane or $C_4$-$C_{20}$-aromatic ring. Preferably $R^1$ and $R^2$, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The weight ratio of vinyl compound to polymerization catalyst in the modification step of the polymerization catalyst preferably is 0.3 or more up to 40.0, such as 0.4 to 20.0 or more preferably 0.5 to 15.0, like 0.5 to 2.0.

The polymerization of the vinyl compound, e. g. VCH, can be done in any inert fluid that does not dissolve the polymer formed (e. g. polyVCH). It is important to make sure that the viscosity of the final catalyst/polymerized vinyl compound/inert fluid mixture is sufficiently high to prevent the catalyst particles from settling during storage and transport.

The adjustment of the viscosity of the mixture can be done either before or after the polymerization of the vinyl compound. It is, e.g., possible to carry out the polymerization in a low viscosity oil and after the polymerization of the vinyl compound the viscosity can be adjusted by addition of a highly viscous substance. Such highly viscous substance can be a "wax", such as an oil or a mixture of an oil with a solid or highly viscous substance (oil-grease). The viscosity of such a viscous substance is usually 1,000 to 15,000 cP at room temperature. The advantage of using wax is that the catalyst storing and feeding into the process is improved. Since no washing, drying, sieving and transferring are needed, the catalyst activity is maintained.

The weight ratio between the oil and the solid or highly viscous polymer is preferably less than 5: 1.

In addition to viscous substances, liquid hydrocarbons, such as isobutane, propane, pentane and hexane, can also be used as a medium in the modification step.

The polypropylenes produced with a catalyst modified with polymerized vinyl compounds contain essentially no free (unreacted) vinyl compounds. This means that the vinyl compounds shall be completely reacted in the catalyst modification step. To that end, the weight ratio of the (added) vinyl compound to the catalyst should be in the range of 0.05 to 10.0, preferably less than 3.0, more preferably about 0.1 to 2.0, and in particular about 0.1 to 1.5. It should be noted that no benefits are achieved by using vinyl compounds in excess. Further, the reaction time of the catalyst modification by polymerization of a vinyl compound should be sufficient to allow for complete reaction of the vinyl monomer, i.e. the polymerization is continued until the amount of unreacted vinyl compounds in the reaction mixture (including the polymerization medium and the reactants) is less than 0.5 wt%, in particular less than 2000 ppm by weight (shown by analysis). Thus, when the prepolymerized catalyst contains a maximum of about 0.1 wt% vinyl compound, the final vinyl compound content in the polypropylene will be below the limit of determination using the GC-MS method (< 0.01 ppm by weight). Generally, when operating on an industrial scale, a polymerization time of at least 30 minutes is required, preferably the polymerization time is at least 1 hour and in particular at least 5 hours. Polymerization times even in the range of 6 to 50 hours can be used. The modification can be done at temperatures of 10°C to 60°C, preferably 15°C to 55°C.

General conditions for the modification of the catalyst are also disclosed in WO 00/6831.

The preferred embodiments as described previously in the present application with respect to the vinyl compound also apply with respect to the polymerization catalyst of the present invention and the preferred polypropylene composition in accordance with the present invention.

Suitable media for the modification step include, in addition to oils, also aliphatic inert organic solvents with low viscosity, such as pentane and heptane. Furthermore, small amounts of hydrogen can be used during the modification.

The Ziegler-Natta catalyst is preferably used in association with an alkyl aluminum cocatalyst and optionally external donors.

As further component in the instant polymerization process an external donor is preferably present. Suitable external donors include certain silanes, ethers, esters, amines, ketones, heterocyclic compounds and blends of these. It is especially preferred to use a silane. It is most preferred to use silanes of the general formula

$$R^a{}_pR^b{}_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both $R^3$ and $R^4$ are the same, yet more preferably both $R^3$ and $R^4$ are an ethyl group.

Especially preferred external donors are the dicyclopentyl dimethoxy silane donor (D-donor) or the cyclohexylmethyl dimethoxy silane donor (C-Donor).

In addition to the Ziegler-Natta catalyst and the optional external donor, a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst is a trialkylaluminium, like triethylaluminium (TEAL), dialkyl aluminium chloride or alkyl aluminium dichloride or mixtures thereof. In one specific embodiment the co-catalyst is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of from 5.0 to 45.0, preferably is in the range of from 5.0 to 35.0, more preferably is in the range of from 5.0 to 25.0; and optionally

(b) the mol-ratio of co-catalyst (Co) to titanium compound (TC) [Co/TC] must be in the range of above 80.0 to 500.0, preferably is in the range of from 100.0 to 350.0, still more preferably is in the range of from 120.0 to 300.0.

The random propylene terpolymer used according to this invention is thus preferably produced in the presence of

(a) a Ziegler-Natta catalyst comprising an internal phthalate free donor,
(b) optionally a co-catalyst (Co), and
(c) optionally an external donor (ED).

*Component (b): ethylene based plastomer*

The ethylene based plastomer is a copolymer of ethylene and propylene or a $C_4$ - $C_{10}$ alpha-olefin.
Suitable $C_4$-$C_{10}$ alpha-olefins include 1-butene, 1-hexene and 1-octene, preferably 1-butene or 1-octene and more preferably 1-octene.
Preferably, copolymers of ethylene and 1-octene are used.
Suitable ethylene based plastomers have a density in the range of from 0.850 to 0.915 g/cm$^3$, preferably in the range of from 0.860 to 0.902 g/cm$^3$, more preferably in the range of from 0.860 to 0.890 g/cm$^3$.
The MFR$_2$ (ISO 1133; 190°C; 2.16kg) of suitable ethylene based plastomers is in the range of from 2.0 to 10.0 g/10 min, preferably in the range of from 2.5 to 9.0 g/10 min and more preferably in the range of from 3.0 to 8.0 g/10 min.
The melting points (measured with DSC according to ISO 11357-3) of suitable ethylene based plastomers are below 130°C, preferably below 120°C, more preferably below 110°C and most preferably below 100°C.
Furthermore suitable ethylene based plastomers can have a glass transition temperature Tg (measured with DMTA according to ISO 6721-7) of below -25°C, preferably below -30°C, more preferably below -35°C.
In case the copolymer is a copolymer of ethylene and propylene it has an ethylene content from 10.0 to 55.0 wt%, preferably from 10.0 to 45.0 wt%, more preferably from 10.0 to 35.0 wt%, yet more preferably from 10.0 to 25.0 wt% and even more preferably from 10.0 to 20.0 wt%.
In case the copolymer is a copolymer of ethylene and a $C_4$ - $C_{10}$ alpha olefin it has an ethylene content from 60.0 to 95.0 wt%, preferably from 60.0 to 90.0 wt% and more preferably from 60.0 to 88.0 wt%.
The molecular mass distribution Mw/Mn of suitable ethylene based plastomers is most often below 4.0, such as 3.8 or below, but is at least 1.7. It is preferably between 3.5 and 1.8.
Suitable ethylene based plastomers can be any copolymer of ethylene and propylene or ethylene and $C_4$ - $C_{10}$ alpha olefin having the above defined properties, which are commercial available, i.a. from Borealis under the tradename Queo, from DOW under the tradename Engage or Affinity, or from Mitsui under the tradename Tafmer.
Alternately these ethylene based plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons.
Preferably, these ethylene based plastomers are prepared by a one stage or two stage solution polymerization process, especially by high temperature solution polymerization process at temperatures higher than 100°C.
Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.
Preferably the solution polymerization process is a high temperature solution polymerization process, using a polymerization temperature of higher than 100°C. Preferably the polymerization temperature is at least 110°C, more preferably at least 150°C. The polymerization temperature can be up to 250°C.
The pressure in such a solution polymerization process is preferably in a range of 10 to 100 bar, preferably 15 to 100 bar and more preferably 20 to 100 bar.
The liquid hydrocarbon solvent used is preferably a $C_{5-12}$-hydrocarbon which may be unsubstituted or substituted by $C_{1-4}$ alkyl group such as pentane, methyl pentane, hexane, heptane, octane, cyclohexane, methylcyclohexane and hydrogenated naphtha. More preferably unsubstituted $C_6$-$C_{10}$-hydrocarbon solvents are used.
A known solution technology suitable for the process according to the invention is the Borceed™ technology.

*Blend (A)*

The blend used in the polypropylene composition of the present invention comprises, 75.0 to 95.0 wt% of component (a), i.e. the random propylene terpolymer as defined above and thus 5.0 to 25.0 wt% of component (b), i.e.

the ethylene based plastomer as defined above, whereby the amounts of (a) and (b) sum up to 100 wt% for the blend.

Preferably, component (a), i.e. the random propylene terpolymer, is present in the blend in an amount of from 80.0 to 95.0 wt%, and more preferably in an amount of from 85.0 to 94.0 wt%.

Thus component (b), i.e. the ethylene based plastomer is preferably present in the blend in an amount of from 5.0 to 20.0 wt%, and more preferably in an amount of from 6.0 to 15.0 wt%.

Blends suitable for the present invention can be produced by dry-blending / mixing of the blend partners or by melt mixing of the melt partners.

The blend can be produced by any suitable melt mixing process at temperatures above the melting point of the respective blend. Typical devices for performing said melt mixing process are twin screw extruders, single screw extruders optionally combined with static mixers, chamber kneaders like Farrel kneaders, Banbury type mixers and reciprocating co-kneaders like Buss co-kneaders. Preferably, the melt mixing process is carried out in a twin screw extruder with high intensity mixing segments and preferably at a temperature of 170°C to 270 °C, more preferably of 180°C to 250 °C.

It is also possible to produce the blend of the present invention by dry-blending in a suitable mixing equipment, like horizontal and vertical agitated chambers, tumbling vessels, and Turbula mixers, as long as sufficient homogeneity is obtained.

*Polypropylene composition*

The polypropylene composition of the present invention comprises the above defined blend (A) of component (a) and component (b) and may optionally contain one or more additives in a total amount of from 0.0 up to 5.0 wt%, based on the composition, selected from the group comprising slip agents, anti-block agents, UV stabilizers, acid scavengers, anti-oxidants, alpha and/or beta nucleating agents, antistatic agents, etc..

In case that the composition contains the blend (A) and one or more additives, the amounts of blend (A) and additive(s) sum up to 100 wt% for the composition.

Such additives are commonly known to an art skilled person.

Slip agents are also commonly known in the art. Slip agents migrate to the surface and act as lubricants polymer to polymer and polymer against metal rollers, giving reduced coefficient of friction (CoF) as a result. Examples are fatty acid amids, like erucamides (CAS No. 112-84-5), oleamides (CAS No. 301-02-0) or stearamide (CAS No. 124-26-5).

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends.

Acid scavengers are also commonly known in the art. Examples are calcium stearates, sodium stearates, zinc stearates, magnesium and zinc oxides, synthetic hydrotalcite (e.g. SHT, CAS-no. 11097-59-9), lactates and lactylates, as well as calcium stearate (CAS 1592-23-0) and zinc stearate (CAS 557-05-1);

Common antiblocking agents are natural silica such as diatomaceous earth (such as CAS-no. 60676-86-0 (SuperfFloss™), CAS-no. 60676-86-0 (SuperFloss E™), or CAS-no. 60676-86-0 (Celite 499™)), synthetic silica (such as CAS-no. 7631-86-9, CAS-no. 7631-86-9, CASno. 7631-86-9, CAS-no. 7631-86-9, CAS-no. 7631-86-9, CAS-no. 7631-86-9, CAS-no. 112926-00-8, CAS-no. 7631-86-9, or CAS-no. 7631-86-9), silicates (such as aluminium silicate (Kaolin) CAS-no. 1318-74-7, sodium aluminum silicate CAS-no. 1344-00-9, calcined kaolin CAS-no. 92704-41-1, aluminum silicate CAS-no. 1327-36-2, or calcium silicate CAS-no. 1344-95-2), synthetic zeolites (such as sodium calcium aluminosilicate hydrate CAS-no. 1344-01-0, CAS-no. 1344-01-0, or sodium calcium aluminosilicate, hydrate CAS-no. 1344-01-0)

Suitable UV-stabilisers are, for example, Bis-(2,2,6,6-tetramethyl-4-piperidyl)-sebacate (CAS 52829-07-9, Tinuvin 770); 2-hydroxy-4-n-octoxy-benzophenone (CAS 1843-05-6, Chimassorb 81)

Alpha nucleating agents like sodium benzoate (CAS 532-32-1); 1,3:2,4-bis(3,4-dimethylbenzylidene)sorbitol (CAS 135861-56-2, Millad 3988).

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Usually these additives are added in quantities of 100-2.000 ppm for each single component.

The optional additives are either added during blending component (a) and component (b) or are already added to component (a) and/or (b) during their production, i.e. during pelletization.

The polypropylene composition has an MFR$_2$ (2.16 kg, 230°C) in the range of 1.0 to 15.0 g/10min, preferably in the range of 2.0 to 12.0 g/10min, more preferably in the range of 3.0 to 10.0 g/10min like in the range of 5.5 to 9.0 g/10min.

Generally, the polypropylene composition according to the invention has a sealing initiation temperature (SIT) in the range of 90 to <102°C, preferably in the range of 92 to 100°C. The sealing initiation temperature (SIT) is measured

on a 50μm cast film in principle according to the norm ASTM F1921 - 12 Method A, which has been modified as described in the experimental part.

Generally, the polypropylene composition according to the invention has a melting temperature (Tm) in the range of > 133 to 160°C, preferably in the range of 134 to 155°C, more preferably in the range of 134 to 150 °C. The melting temperature (Tm) is determined by DSC according to ISO 11357.

Generally, the polypropylene composition according to the present invention satisfies the equation (1) below:

$$\text{Delta} = \text{Tm} - \text{SIT} \qquad \text{equation (1),}$$

wherein Delta is in the range of 33 to 50 °C, and wherein

Tm is the melting temperature, in °C, of the polypropylene composition according to the invention,

SIT is the sealing initiation temperature (SIT) measured on a 50μm cast film.

Preferably, the Delta value according to equation (1) is in the range of 34 to 48°C, more preferably in the range of 35 to 45°C.

Alternatively, the polypropylene composition has a xylene cold soluble (XCS) content measured according to ISO 6427 of below 35.0 wt%, more preferably of below 32.0 wt%, even more preferably of below 30.0 wt%. Generally, the polypropylene composition according to the invention has a xylene soluble fraction (XCS) in the range of 15.0 to below 35.0 wt%, preferably in the range of 15.0 to below 32.0 wt%, more preferably in the range of 15.0 to below 30.0 wt%. The xylene soluble fraction is determined at 25°C according to ISO 16152; 2005.

### Use

The present invention is not only directed to the instant polypropylene composition but also the use of the polypropylene composition for preparing articles and the articles comprising the polypropylene composition.

Suitable articles are films for flexible packaging systems, such as bags or pouches for food and pharmaceutical packaging or medical articles in general.

In an embodiment the present invention is related to an article, the article being an unoriented mono-layer film comprising the inventive polypropylene composition. Accordingly the present invention is also directed to an article, the article being an unoriented mono-layer film, like cast film or blown film, e.g. air cooled blown film, comprising at least 90 wt%, preferably comprising at least 95 wt%, yet more preferably comprising at least 99 wt%, of the instant polypropylene composition.

In another embodiment the present invention is related to an article, the article being an biaxially oriented mono-layer film comprising the inventive polypropylene composition. Accordingly the present invention is also directed to an article, the article being an biaxially oriented mono-layer film, like cast film or blown film, e.g. air cooled blown film, comprising at least 90 wt%, preferably comprising at least 95 wt%, yet more preferably comprising at least 99 wt%, of the instant polypropylene composition.

The above described composition is suitable for the production of blown films as well as cast films.

*Description of film production by blown film technology*

The above described composition is capable of being manufactured into water or air quench blown films, preferably air quenched blown films, on typical polyethylene blown film production equipment.

In principle the process comprising the steps of

(i) blowing up a tube of molten material with air perpendicularly to the upwards direction from a side-fed blown film die;
(ii) cooling it down with water contact cooling ring or air quench;
(iii) folding it and guiding it over deflector rolls onto the winder

In the blown film process the polypropylene composition melt is extruded through an annular die and blown into a tubular film by forming a bubble which is collapsed between nip rollers after solidification. The blown extrusion can be preferably effected at a temperature in the range 160°C to 240°C, and cooled by water or preferably by blowing gas (generally air) at a temperature of 10°C to 50°C to provide a frost line height of 0.5 to 8 times the diameter of the die. The blow up ratio should generally be in the range of from 1.5 to 4, such as from 2 to 4, preferably 2.5 to 3.5.

*Description of film production by cast film technology*

In this most simple technology for producing polymer films, the molten blend is extruded through a slot die fed by a (normally single-screw) extruder onto a first cooled roll, the socalled chill-roll. From this roll, the already solidified film is taken up by a second roll (nip roll or take-up roll) and transported to a winding device after trimming the edges. Only a very limited amount of orientation is created in the film, which is determined by the ratio between die thickness and film thickness or the extrusion speed and the take-up speed, respectively. Due to its technical simplicity, cast film technology is a very economical and easy-to-handle process. The films resulting from this technology are characterised by good transparency and rather isotropic mechanical properties (limited stiffness, high toughness).

Summing up the process comprises the steps of

i) pouring or spreading a solution, hot-melt or dispersion of a material onto a temporary carrier
ii) hardening the material, and
iii) stripping the hardened film from the surface of the carrier.

In case a film is produced by cast film technology the molten polypropylene composition is extruded through a slot extrusion die onto a chill roll to cool the polypropylene composition to a solid film. Typically the polypropylene composition is firstly compressed and liquefied in an extruder, it being possible for any additives to be already added to the polypropylene composition or introduced at this stage via a masterbatch. The melt is then forced through a flat-film die (slot die), and the extruded film is taken off on one or more take-off rolls, during which it cools and solidifies. It has proven particularly favorable to keep the take-off roll or rolls, by means of which the extruded film is cooled and solidified, at a temperature from 10°C to 50°C, preferably from 15°C to 40°C.

Mono-layer films having a thickness of 5 to 300 $\mu$m, preferably 10 to 200 $\mu$m, more preferably 20 to 150 $\mu$m are suitable according to the present invention.

It has been found that such polypropylene composition according to the present invention provides the film material made thereof with a combination of low sealing initiation temperature (SIT), high melting point, high hot-tack and beneficial optical properties, i.e. low haze.

In a further aspect the present invention is related to the use of the mono-layer films according to the invention for lamination films or multilayer films for packaging films and medical/hygienic films, wherein the mono-layer films according to the invention comprise at least one layer.

As alternative in one further aspect the present invention is related to the use of the monolayer films according to the invention as sealing layer in a polypropylene multi-layer film, which can be manufactured either by co-extrusion or lamination.

Further, the invention is also directed to a multi-layer film construction, comprising an unoriented mono-layer film as defined above as an outermost layer, i.e as sealing layer. Further, the invention is also directed to a multi-layer film construction, comprising an biaxially oriented mono-layer film as defined above as an outermost layer, i.e as sealing layer.

Unoriented mono-layer films comprising the polypropylene composition of the present invention have a hot-tack force in the range of from 1.5 to 6.0 N (measured on a 50$\mu$m cast film). The hot-tack force of the polypropylene composition containing films is measured according to ASTM F1921-12 - Method B.

It is preferred that the hot-tack force measured on a 50$\mu$m cast film is in the range of from 1.8 to 5.5 N, more preferably in the range of from 2.0 to 5.0 N and even more preferably in the range of from 2.1 to 4.0 N.

Furthermore, such an unoriented film comprising the inventive polypropylene composition shall preferably have a haze determined on 50 $\mu$m cast film of below 4.0%, preferably of below 3.0%.

The tensile modulus in machine (MD) direction (determined acc. to ISO 527-3 on cast films with a thickness of 50 $\mu$m) of such unoriented film comprising the inventive polypropylene composition shall preferably be at least 200 MPa, more preferably at least 250 MPA.

A suitable upper limit is 500 MPa. Thus, the tensile modulus in machine (MD) direction (determined acc. to ISO 527-3 on cast films with a thickness of 50 $\mu$m) shall preferably be in the range of at least 200 MPa up to 500 MPa.

The present specification further describes a cast film, wherein the cast film has

i. a sealing initiation temperature (SIT), measured on a 50$\mu$m cast film, in the range of 90 to < 102°C, preferably in the range of 92 to 100°C,
ii. a haze according to ASTM D1003-00 determined on 50 $\mu$m cast film of below 4.0%, preferably below 3.0%,
iii. a hot-tack force determined on 50 $\mu$m cast film in the range of from 1.8 to 5.5 N, preferably 2.0 to 5.0 N and
iv. a tensile modulus in machine (MD) direction (determined acc. to ISO 527-3 on cast films with a thickness of 50 $\mu$m) in the range of at least 200 MPa up to 500 MPa.

Such cast films are made from polypropylene, preferably made from the inventive polypropylene composition.

A multi-layer film construction comprising at least one layer comprising the inventive polypropylene composition is preferably produced by a lamination process or by multi-layer co-extrusion followed by film casting or film blowing. In this case, at least one of the outermost layers of said multi-layer film construction serving as sealing layer(s) shall comprise the inventive polypropylene composition as defined above. The inventive multilayer film construction shall preferably have a thickness in the range of 30 to 500 $\mu$m, more preferably in the range of 50 to 400 $\mu$m, like in the range of 60 to 300 $\mu$m. The sealing layer(s) comprising the inventive polypropylene composition shall preferably have a thickness in the range of 3 to 50 $\mu$m, more preferably in the range of 5 to 30 $\mu$m, like in the range of 8 to 25 $\mu$m.

Films and/or multi-layer film constructions according to the present invention shall preferably be used for flexible packaging systems, such as bags or pouches for food and pharmaceutical packaging or medical articles in general.

## EXAMPLES

### Measuring methods

The following definitions of terms and determination methods apply for the above general description of the invention as well as to the below examples, unless otherwise defined.

### a) Melt Flow Rate

The melt flow rate (MFR) is determined according to ISO 1133 and is indicated in g/10min. The MFR is an indication of the flowability and hence the processability of the polymer. The higher the melt flow rate, the lower the viscosity of the polymer. The $MFR_2$ of polypropylene is determined at a temperature of 230 °C and under a load of 2.16 kg.

### b) Melt Flow Rate ($MFR_2$) for the propylene terpolymer (PPF2)

The $MFR_2$ for the propylene terpolymer (PPF2) is calculated using the below formula:

$$\ln(MFR_2 \text{ of the polypropylene composition}) = x\,(\ln(MFR_2 \text{ of the propylene terpolymer}$$
$$(PPF1))) + (1-x)(\ln(MFR_2 \text{ of the propylene terpolymer (PPF2)}));$$

wherein $MFR_2$ of the polypropylene composition means the $MFR_2$ of the PP composition according to the present invention and wherein
x = the weight ratio (wt%) of the propylene terpolymer (PPF1) based on the combined weight of the propylene terpolymer (PPF1) and the weight of the propylene terpolymer (PPF2) which is in total =1.

### c) Melting temperature

The melting temperature, Tm, is determined by differential scanning calorimetry (DSC) according to ISO 11357-3 with a TA-Instruments 2920 Dual-Cell with RSC refrigeration apparatus and data station. A heating and cooling rate of 10 °C/min is applied in a heat/cool/heat cycle between +23 and +210 °C. The melting temperature (Tm) is being determined in the second heating step.

### d) Xylene cold soluble fraction (XCS, wt%)

The amount of the polymer soluble in xylene is determined at 25.0 °C according to ISO 16152, 2005.

### e) Comonomer content

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed and the comonomer content quantified in the following way. The amount isolated 1-butene incorporated in PBP sequences was quantified using the integral of the $\alpha$B2 sites at 43.6 ppm accounting for the number of reporting sites per comonomer:

$$B = I_{\alpha B2} / 2$$

The amount consecutively incorporated 1-butene in PBBP sequences was quantified using the integral of the $\alpha\alpha$B2 site at 40.5 ppm accounting for the number of reporting sites per comonomer:

$$BB = 2 * I_{\alpha\alpha B2}$$

The total 1-butene content was calculated based on the sum of isolated and consecutively incorporated 1-butene:

$$Btotal = B + BB$$

Characteristic signals corresponding to the incorporation of ethylene were observed and the comonomer content quantified in the following way. The amount isolated ethylene incorporated in PEP sequences was quantified using the integral of the S$\alpha\gamma$ sites at 37.9 ppm accounting for the number of reporting sites per comonomer:

$$E = I_{S\alpha\gamma} / 2$$

When characteristic signals corresponding to consecutive ethylene incorporation in PEEP sequences were observed the amount of such consecutively incorporated ethylene was quantified using the integral of S$_{\beta\delta}$ sites at 27 ppm accounting for the number of reporting sites per comonomer:

$$EE = I_{S\beta\delta}$$

With no sites indicative of consecutive ethylene incorporation in PEEE sequences observed the total ethylene comonomer content was calculated as:

$$Etotal = E + EE$$

Characteristic signals corresponding to regio defects were not observed {resconi00}.
The amount of propene was quantified based on the main S$\alpha\alpha$ methylene sites at 46.7 ppm and compensating for the relative amount of methylene unit of propene in PBP, PBBP, PEP and PEEP sequences not accounted for:

$$Ptotal = I_{S\alpha\alpha} + B + BB / 2 + E + EE / 2$$

The total mole fraction of 1-butene in the polymer was then calculated as:

$$fB = ( Btotal / ( Etotal + Ptotal + Btotal ) )$$

The total mole fraction of ethylene in the polymer was then calculated as:

$$fE = ( Etotal / ( Etotal + Ptotal + Btotal ) )$$

The mole percent comonomer incorporation was calculated from the mole fractions:

$$B \ [mol\%] = 100 * fB$$

$$E \ [mol\%] = 100 * fE$$

The weight percent comonomer incorporation was calculated from the mole fractions:

$$B \ [wt\%] = 100 * ( \ fB * 56.11 \ ) / ( \ (fE * 28.05) + (fB * 56.11) + ((1-(fE+fB)) * 42.08) \ )$$

$$E \ [wt\%] = 100 * ( \ fE * 28.05 \ ) / ( \ (fE * 28.05) + (fB * 56.11) + ((1-(fE+fB)) * 42.08) \ ).$$

klimke06
Klimke, K., Parkinson, M., Piel, C., Kaminsky, W., Spiess, H.W., Wilhelm, M., Macromol. Chem. Phys. 2006;207:382.

parkinson07
Parkinson, M., Klimke, K., Spiess, H.W., Wilhelm, M., Macromol. Chem. Phys. 2007;208:2128.

pollard04
Pollard, M., Klimke, K., Graf, R., Spiess, H.W., Wilhelm, M., Sperber, O., Piel, C., Kaminsky, W., Macromolecules 2004;37:813.

filip05
Filip, X., Tripon, C., Filip, C., J. Mag. Resn. 2005, 176, 239

griffin 07
Griffin, J.M., Tripon, C., Samoson, A., Filip, C., and Brown, S.P., Mag. Res. in Chem. 2007 45, S1, S198

castignolles09
Castignolles, P., Graf, R., Parkinson, M., Wilhelm, M., Gaborieau, M., Polymer 50 (2009) 2373

busico01
Resconi, L., Cavallo, L., Fait, A., Piemontesi, F., Chem. Rev. 2000, 100, 1253

The comonomer content of the propylene terpolymer (PPF2) is calculated using the below formula:

Comonomer content of the polypropylene composition = x (Comonomer content of the propylene terpolymer (PPF1)) + (1-x)( Comonomer content of the propylene terpolymer (PPF2)).

x = the weight ratio (wt) of the propylene terpolymer (PPF1) based on the combined weight of the propylene terpolymer (PPF1) and the weight of the propylene terpolymer (PPF2) which is in total =1.

**f) Sealing initiation temperature (SIT), sealing range**

The method determines the sealing temperature range (sealing range) of polypropylene films, in particular blown films or cast films according to ASTM F1921 - 12 modified as described below.
The sealing range is the temperature range, in which the films can be sealed according to conditions given below.
The lower limit (heat sealing initiation temperature (SIT)) is the sealing temperature at which a sealing force of $\geq$ 5 N is achieved. The upper limit (sealing end temperature (SET)) is identified as a temperature at one step before the film burns through.
The sealing range is determined on a J&B sealing device (Type 4000) with a cast film of 50 $\mu$m thickness with the following further parameters:

Specimen width: 25 mm
Sealing pressure: 0.67 N/mm$^2$
Sealing time: 1 sec
Cooling time: 30 sec
Clamp separation rate: 42 mm/sec
Start temperature: 80 °C
End temperature: 150 °C
Sealing temperature interval (Increments): 5 °C
Specimens are sealed A to A at each sealing jaw (sealbar) temperature and seal force is determined at each step. The SIT is determined at which the sealing force reaches 5 N.

**g) Cast films on PM30 cast film line**

Films were produced on a PM30 cast film line, with a melt temperature of 250°C and chill roll temperature of 10°C. The throughput was 4.5kg/h. The film thickness is 50 μm.

h) **Haze** was determined according to ASTM D1003-00 on the cast films of 50 μm thickness.

i) **Hot-tack force**

The hot-tack force was determined according to ASTM F1921-12 - Method B on a J&B Hot-Tack Tester on a 50 μm thickness cast film.
All film test specimens were prepared in standard atmospheres for conditioning and testing at 23°C ($\pm$ 2°C) and 50 % ($\pm$ 10 %) relative humidity.
The minimum conditioning time of test specimen in standard atmosphere before start testing is at least 16 h. The minimum storage time between extrusion of film sample and start testing is at least 88 h.
The hot tack measurement determines the strength of heat seals formed in the films, immediately after the seal has been made and before it cools to ambient temperature. The hot-tack measurement was performed under the following conditions.

Film Specimen width: 25 mm.
Seal bar length: 50 mm
Seal bar width: 5 mm
Seal bar shape: flat
Seal Pressure: 0.15 N/mm$^2$.
Seal Time: 0.5sec.
Cool time: 0,2 sec.
Peel Speed: 200 mm/sec.
Start temperature: 90°C.
End temperature: 140°C.
Increments: 5°C.

The hot-tack force was measured as a function of temperature within the temperature range and with temperature increments as indicated above. The number of test specimens was at least 3 specimens per temperature. The output of this method is a hot tack curve; a force vs. temperature curve.
The hot tack force (HTF) is evaluated from the curve as the highest force (maximum peak value) with failure mode "peel".

**j) Tensile Modulus**

Tensile moduli in machine (MD) direction were determined acc. to ISO 527-3 on cast films with a thickness of 50 μm at a cross head speed of 100 mm/min.

**Preparation of the Catalyst**

The catalyst used in the polymerization processes for the propylene terpolymer of the inventive examples (IE1-IE3) as well as for comparative Example (CE1) was prepared as follows:

Used chemicals:

20 % solution in toluene of butyl ethyl magnesium (Mg(Bu)(Et), BEM), provided by Chemtura 2-ethylhexanol, provided by Amphochem
3-Butoxy-2-propanol - (DOWANOL™ PnB), provided by Dow
bis(2-ethylhexyl)citraconate, provided by SynphaBase
$TiCl_4$, provided by Millenium Chemicals
Toluene, provided by Aspokem
Viscoplex® 1-254, provided by Evonik
Heptane, provided by Chevron

*Preparation of a Mg alkoxy compound*

Mg alkoxide solution was prepared by adding, with stirring (70 rpm), into 11 kg of a 20 wt% solution in toluene of butyl ethyl magnesium (Mg(Bu)(Et)), a mixture of 4.7 kg of 2-ethylhexanol and 1.2 kg of butoxypropanol in a 20 l stainless steel reactor. During the addition the reactor contents were maintained below 45°C. After addition was completed, mixing (70 rpm) of the reaction mixture was continued at 60°C for 30 minutes. After cooling to room temperature 2.3 kg g of the donor bis(2-ethylhexyl)citraconate was added to the Mg-alkoxide solution keeping temperature below 25°C. Mixing was continued for 15 minutes under stirring (70 rpm).

*Preparation of solid catalyst component*

20.3 kg of $TiCl_4$ and 1.1 kg of toluene were added into a 20 l stainless steel reactor. Under 350 rpm mixing and keeping the temperature at 0°C, 14.5 kg of the Mg alkoxy compound prepared in example 1 was added during 1.5 hours. 1.7 l of Viscoplex® 1-254 and 7.5 kg of heptane were added and after 1 hour mixing at 0°C the temperature of the formed emulsion was raised to 90°C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50°C and during the second wash to room temperature.

The thus obtained catalyst was used along with triethyl-aluminium (TEAL) as co-catalyst and dicyclopentyl dimethoxy silane (D-Donor) as donor for preparing the propylene terpolymer (a) used according to the present invention. Polymerization was done in Borstar plant with a pre-polymerization step, one loop reactor and 1 gas-phase reactor. The conditions can be seen in Table 1.

**Table 1: Preparation of random propylene terpolymer (a)**

| | | |
|---|---|---|
| **Prepolymerization** | | |
| TEAL/Ti | [mol/mol] | 120 |
| TEAL/donor | [mol/mol] | 6.3 |
| Temperature | [°C] | 20 |
| **Loop** | | |
| Temperature | [°C] | 60 |
| Split | [%] | 43 |
| H2/C3 ratio | [mol/kmol] | 1.0 |
| C2/C3 ratio | [mol/kmol] | 6.0 |
| $C_4/C_3$ ratio | [mol/kmol] | 225 |
| $MFR_2$ (PPF1) | [g/10min] | 3.8 |
| XCS (PPF1) | [wt%] | 5.7 |

(continued)

| Loop | | |
|---|---|---|
| C2 content (PPF1) | [wt%] | 0.3 |
| C4 content (PPF1) | [wt%] | 9.5 |
| **GPR 1** | | |
| Temperature | [°C] | 75 |
| Pressure | [kPa] | 1850 |
| Split | [%] | 57 |
| H2/C3 ratio | [mol/kmol] | 25.9 |
| C2/C3 ratio | [mol/kmol] | 23.4 |
| $C_4/C_3$ ratio | [mol/kmol] | 198 |
| $MFR_2$ | [g/10min] | 5.4 |
| XCS | [wt%] | 18.6 |
| C2 content (PPF2) | [wt%] | 1.6 |
| C4 content (PPF2) | [wt%] | 9.7 |
| C2 ethylene<br>C4 butene<br>H2/C3 ratio hydrogen / propylene feed ratio<br>C2/C3 ratio ethylene / propylene feed ratio<br>C4/C3 ratio butene / propylene feed ratio<br>GPR 1 1st gas phase reactor<br>Loop Loop reactor | | |

The so obtained terpolymer was melt blended with the below cited additives on a co-rotating twin screw extruder type Coperion ZSK 40 (screw diameter 40 mm, L/D ratio 38) at temperatures in the range of 170-190°C, using a high intensity mixing screw configuration with two sets of kneading blocks.

The terpolymer thus contained 500 ppm of Irganox 1010 (Pentaerythrityl-tetrakis(3-(3',5'-di-tert. butyl-4-hydroxyphenyl)-propionate, CAS No. 6683-19-8), 500 ppm of Irgafos 168 (Tris (2,4-di-t-butylphenyl) phosphite, CAS No. 31570-04-4) and 400 ppm of Calcium stearate (CAS. No. 1592-23-0) as additives.

The terpolymer data described in Table 2 are measured on the pellets obtained after melt blending as described above.

Table 2: properties of component (a), i.e. propylene-ethylene-1-butene terpolymer

| Property | unit | |
|---|---|---|
| Total C2 | [wt%] | 2.5 |
| Total C4 | [wt%] | 9.9 |
| $MFR_2$ | [g/10 min] | 5.4 |
| Tm | [°C] | 133 |
| XCS | [wt%] | 18.6 |

**Component (b): ethylene based plastomer**

As component (b) the following plastomers were used:

For inventive Example IE1
(b-1): Queo™ 8203, ethylene-octene copolymer, MFR(190/2.16) of 3 g/10 min, density 0.883 g/cm$^3$, melting point: 74°C, produced in a solution polymerization process using a metallocene catalyst.

For inventive Example IE2

(b-2): Queo™ 0203, ethylene-octene copolymer, MFR(190/2.16) of 3 g/10 min, density 0.902 g/cm$^3$, melting point: 96°C, produced in a solution polymerization process using a metallocene catalyst.

For inventive Example IE3

(b-3): Queo™ 7007LA, ethylene-octene copolymer, MFR(190/2.16) of 6.6 g/10 min, density 0.870 g/cm$^3$, melting point: 48°C, produced in a solution polymerization process using a metallocene catalyst.

Queo™ grades are commercially available from Borealis.

**Polypropylene composition**

Component (a), i.e. the terpolymer and component (b) were directly dry blended on the PM30 cast film line and 50 $\mu$m cast films were produced with the set-up as described in the method part.

In Table 3 the compositions (IE1 -IE3, CE1 and CE2) and their properties are shown:

**Table 3:**

| Example | unit | IE1 | IE2 | IE3 | CE1 | CE2 |
|---|---|---|---|---|---|---|
| Component (a) | [wt%] | 90 | 90 | 90 | 100 | |
| Component (b-1) | [wt%] | 10 | 0 | 0 | 0 | |
| Component (b-2) | [wt%] | 0 | 10 | 0 | 0 | |
| Component (b-3) | [wt%] | 0 | 0 | 10 | | |
| Composition properties | | | | | | |
| MFR$_2$ | [g/10 min] | 7.1 | 6.7 | 7.8 | 5.4 | 6.0 |
| Tm | [°C] | 135 | 135 | 135 | 133.2 | 131 |
| XCS | [wt%] | 27.8 | 27.5 | 28.5 | 18.6 | n.d. |
| Delta (Tm -SIT) | [°C] | 39 | 36 | 40 | 30.2 | 26 |
| Cast film properties | | | | | | |
| SIT | [°C] | 96 | 99 | 95 | 103 | 105 |
| Tensile Modulus (MD) | [MPa] | 308 | 369 | 296 | 383 | 427 |
| Hot-tack force | [N] | 2.7 | 2.1 | 3.6 | 2.3 | 3.8 |
| Haze | [%] | 1.9 | 2.8 | 1.3 | 0.7 | 1.1 |
| n.d. not determined | | | | | | |
| CE-2 is a C$_2$C$_4$ propylene terpolymer having a medium molecular weight distribution, MFR$_2$ of 6.0 g/10min and is manufactured and distributed by Borealis under the Trade name Borseal TD310BF. | | | | | | |

From Table 3 it can be derived that the polypropylene compositions according to the invention present higher melting temperature (Tm) values and higher Delta (Tm -SIT) values than the comparative examples.

**Claims**

1. Polypropylene composition comprising

    (A) a blend of

        (a) 75.0 to 95.0 wt%, based on the blend, of a random propylene terpolymer comprising

            (i) ethylene-derived comonomer units in an amount of from 1.0 to 2.5 wt% and
            (ii) comonomer units derived from a C$_4$ to C$_{10}$ $\alpha$-olefin in an amount of from 5.0 to 15.0 wt%,
            whereby the random propylene terpolymer has an MFR$_2$ determined at 230°C under a load of 2.16kg according to ISO1133 in a range of 0.5 to 20.0 g/10 min, and wherein the random propylene terpolymer is a binary blend comprising two propylene polymer fractions PPF1 and PPF2 in specific amounts:

a') less than or equal to 50.0 wt% of propylene polymer fraction PPF1 being a propylene terpolymer comprising propylene monomers, 0.1 to 1.2 wt% determined by quantitative $^{13}C\{^1H\}$ NMR spectroscopy ethylene comonomer and 2.0 to 15.0 wt% determined by quantitative $^{13}C\{^1H\}$ NMR spectroscopy of one comonomer selected from $C_4$-$C_{10}$ alpha-olefin
and
b') more than or equal to 50.0 wt% of propylene polymer fraction PPF2 being a propylene terpolymer comprising propylene monomers, 1.0 to 3.0 wt% calculated based on quantitative $^{13}C\{^1H\}$ NMR spectroscopy of ethylene comonomer and 2.0 to 15.0 wt% calculated based on quantitative $^{13}C\{^1H\}$ NMR spectroscopy of one comonomer selected from $C_4$-$C_{10}$ alpha-olefin,

whereby the terpolymer fraction PPF1 has lower ethylene content than terpolymer fraction PPF2; and

(b) 5.0 to 25.0 wt%, based on the blend, of an ethylene based plastomer having a density according to ISO 1183 of from 0.850 g/cm$^3$ to 0.915 g/cm$^3$ and an $MFR_2$ determined according to ISO 1133 at 190°C under a load of 2.16kg in the range of 2.0 to 10.0 g/10 min,
and optionally one or more additives in a total amount of from 0.0 up to 5.0 wt%, based on the composition, the amounts of blend (A) and additive(s) sum up to 100 wt% for the composition,

wherein the polypropylene composition has
i. a melting temperature (Tm) in the range of > 133 to 160 °C as determined by DSC according to ISO 11357,
ii. a sealing initiation temperature (SIT), measured on a 50μm cast film, in the range of 90 to < 102°C, wherein the sealing initiation temperature (SIT) is determined according to ASTM F1921-12 modified as follows:

o heat sealing initiation temperature (SIT) is the sealing temperature at which a sealing force of ≥ 5 N is achieved,
o Specimen width: 25 mm,
o Sealing pressure: 0.67 N/mm$^2$,
o Sealing time: 1 sec,
o Cooling time: 30 sec,
o Clamp separation rate: 42 mm/sec,
o Start temperature: 80 °C,
o End temperature: 150 °C,
o Sealing temperature interval (Increments): 5 °C,
o Specimens are sealed A to A at each sealing jaw (sealbar) temperature and seal force is determined at each step, and whereby

iii. Tm and SIT satisfying the equation:

$$Delta = Tm - SIT,$$

wherein Delta is in the range of 33 to 50 °C.

2. Polypropylene composition according to claim 1, wherein the random propylene terpolymer is a binary blend consisting of two propylene polymer fractions PPF1 and PPF2.

3. Polypropylene composition according to claim 1 or 2, wherein the random propylene terpolymer (a) has a melting temperature Tm measured via DSC according to ISO 11357 in the range of equal or higher than 130°C up to 160°C, preferably in the range of 130°C up to 145°C.

4. Polypropylene composition according to any one of the preceding claims 1 to 3, wherein the random propylene terpolymer (a) has a xylene cold soluble (XCS) amount in the range of 3.0 to below 20.0 wt% measured according to ISO 16152, 2005, at 25°C.

5. Polypropylene composition according to any one of the preceding claims 1 to 4, wherein the ethylene based plastomer

has an $MFR_2$ determined according to ISO 1133 at 190°C under a load of 2.16kg in the range of 3.0 to 9.0 g/10 min.

6. Polypropylene composition according to any one of the preceding claims 1 to 5, wherein the composition has a xylene cold soluble (XCS) amount in the range of 15.0 wt% to below 35.0 wt%, preferably in the range of 15.0 wt% to below 32.0 wt% measured according to ISO 16152, 2005, at 25°C.

7. Process for the preparation of the polypropylene composition according to any one of the preceding claims 1 to 6, the process comprising the steps of

   (i) preparing component (a), i.e. the random propylene terpolymer by polymerizing propylene, ethylene and a $C_4$ to $C_{10}$ α-olefin in the presence of a phthalate free Ziegler-Natta catalyst, wherein said random propylene terpolymer is prepared by a sequential polymerization process comprising at least two reactors connected in series, said process comprising the steps:

   a) polymerizing in a first reactor being a slurry reactor propylene, ethylene and one comonomer selected from $C_4$-$C_{10}$ alpha-olefin obtaining a propylene polymer fraction (PPF1), being a propylene terpolymer as defined in claim 1
   b) transferring the propylene polymer fraction (PPF1) and unreacted comonomers of the reactor (R-1) into a second reactor (R-2) being a first gas-phase reactor-1 (GPR 1),
   c) in the gas-phase reactor-1 (GPR-1) propylene, ethylene and one comonomer selected from $C_4$-$C_{10}$ alpha-olefin are polymerized in the presence of the propylene polymer fraction (PPF1), obtaining a propylene polymer fraction (PPF2), being a propylene terpolymer as defined in claim 1, said propylene polymer fraction (PPF2) and the propylene polymer fraction (PPF1) forming the random propylene terpolymer (a) according to claim 1,
   d) recovering the random propylene terpolymer (a) according to claim 1,

   (ii) mixing said propylene terpolymer (a) with an ethylene based plastomer (b), optionally in the presence of one or more additives, to obtain a mixture of components (a) and (b), and
   (iii) extruding said mixture, to obtain the polypropylene composition comprising the blend (A) of component (a) and (b).

8. Process according to claim 7, wherein the first reactor is a loop reactor (R-1).

9. Use of a polypropylene composition according to claims 1 to 6 or prepared according to claim 7 or 8 for the production of articles.

10. An article comprising the polypropylene composition according to any one of claims 1 to 6 or prepared according to claim 7 or 8.

11. An article according to claim 10, wherein the article is an unoriented film comprising more than 90 wt% of the composition according to any one of the preceding claims 1 to 6 or prepared according to claim 7 or 8, wherein the film is a cast film or a blown film.

12. The film according to claim 11, wherein the film has a sealing initiation temperature, determined as defined in claim 1, in the range of from 90°C to below 102°C, preferably in the range of 92°C to 100°C.

13. The film according to claims 11 or 12, wherein the film has a haze according to ASTM D1003-00 determined on 50 μm cast film of below 4.0%, preferably below 3.0%.

14. The film according to any one of the preceding claims 11 to 13, wherein the film has a hot-tack force determined on 50 μm cast film according to ASTM F1921-12, Method B, in the range of from 1.5 to 6.0 N, preferably in the range of from 1.8 to 5.5 N.

**Patentansprüche**

1. Polypropylenzusammensetzung, umfassend

# EP 3 917 978 B1

(A) ein Gemisch aus

(a) 75,0 bis 95,0 Gew.-%, bezogen auf das Gemisch, eines statistischen Propylenterpolymers, umfassend

(i) von Ethylen abgeleitete Comonomer-Einheiten in einer Menge von 1,0 bis 2,5 Gew.-% und
(ii) Comonomereinheiten, abgeleitet von einem $C_4$ bis $C_{10}$ $\alpha$-Olefin, in einer Menge von 5,0 bis 15,0 Gew.-%,
wobei das statistische Propylenterpolymer eine $MFR_2$, die bei 230°C unter einer Last von 2,16 kg gemäß ISO1133 bestimmt wurde, in einem Bereich von 0,5 bis 20,0 g/10 min aufweist, und wobei das statistische Propylenterpolymer eine binäre Mischung ist, die zwei Propylenpolymerfraktionen PPF1 und PPF2 in bestimmten Mengen umfasst:

a') weniger als oder gleich 50,0 Gew.-% der Propylenpolymerfraktion PPF1, die ein Propylenterpolymer ist, das Propylenmonomere, 0,1 bis 1,2 Gew.-%, bestimmt durch quantitative $^{13}C\{^1H\}$ NMR-Spektroskopie, Ethylen-Comonomer und 2,0 bis 15,0 Gew.-%, bestimmt durch quantitative $^{13}C\{^1H\}$ NMR-Spektroskopie, von einem Comonomer, ausgewählt aus $C_4$-$C_{10}$-Alpha-Olefin und
b') mehr als oder gleich 50,0 Gew.-% der Propylenpolymerfraktion PPF2, die ein Propylenterpolymer ist, das Propylenmonomere, 1,0 bis 3,0 Gew.-%, berechnet auf der Grundlage quantitativer $^{13}C\{^1H\}$ NMR-Spektroskopie, Ethylen-Comonomer und 2,0 bis 15,0 Gew.-%, berechnet auf der Grundlage quantitativer $^{13}C\{^1H\}$ NMR-Spektroskopie, eines Comonomers, ausgewählt aus $C_4$-$C_{10}$ Alpha-Olefin,

wobei die Terpolymerfraktion PPF1 einen geringeren Ethylengehalt aufweist als die Terpolymerfraktion PPF2; und

(b) 5,0 bis 25,0 Gew.-%, bezogen auf das Gemisch, eines Plastomers auf Ethylenbasis mit einer Dichte gemäß ISO 1183 von 0,850 g/cm$^3$ bis 0,915 g/cm$^3$ und einer $MFR_2$, bestimmt gemäß ISO 1133 bei 190°C unter einer Last von 2,16 kg, im Bereich von 2,0 bis 10,0 g/10 min,

und gegebenenfalls ein oder mehrere Additive in einer Gesamtmenge von 0,0 bis 5,0 Gew.-%, bezogen auf die Zusammensetzung, wobei sich die Mengen von Gemisch (A) und Additiv(en) auf 100 Gew.-% für die Zusammensetzung summieren,
wobei die Polypropylenzusammensetzung Folgendes aufweist

i. eine Schmelztemperatur (Tm) im Bereich von > 133 bis 160 °C, bestimmt durch DSC gemäß ISO 11357,
ii. eine Siegelbeginntemperatur (SIT), gemessen an einer 50$\mu$m-Gießfolie, im Bereich von 90 bis < 102°C, wobei die Siegelbeginntemperatur (SIT) gemäß ASTM F1921-12, modifiziert wie folgt, bestimmt wird:

o Die Siegelbeginntemperatur (SIT) ist die Siegeltemperatur, bei der eine Siegelkraft von $\geq$ 5 N erreicht wird,
o Breite des Musters: 25 mm,
o Dichtungsdruck: 0,67 N/mm$^2$ ,
o Versiegelungszeit: 1 Sek,
o Abkühlzeit: 30 Sek,
o Klammerablösungsrate: 42 mm/Sek,
◦ Starttemperatur: 80 °C,
◦ Endtemperatur: 150 °C,
o Siegeltemperaturintervall (in Schritten): 5 °C,
o Die Proben werden bei jeder Temperatur der Schweißbacken (Schweißbalken) von A nach A geschweißt, und die Schweißkraft wird bei jedem Schritt bestimmt, und dabei

iii. Tm und SIT, die die Gleichung erfüllen:

$$Delta = Tm - SIT,$$

wobei Delta im Bereich von 33 bis 50 °C liegt.

**2.** Polypropylenzusammensetzung gemäß Anspruch 1, wobei das statistische Propylenterpolymer ein binäres Gemisch ist, das aus zwei Propylenpolymerfraktionen PPF1 und PPF2 besteht.

**3.** Polypropylenzusammensetzung gemäß Anspruch 1 oder 2, wobei das statistische Propylenterpolymer (a) eine mittels DSC nach ISO 11357 gemessene Schmelztemperatur Tm im Bereich von gleich oder höher als 130°C bis zu 160°C, vorzugsweise im Bereich von 130°C bis zu 145°C, aufweist.

**4.** Polypropylenzusammensetzung gemäß einem der vorhergehenden Ansprüche 1 bis 3, wobei das statistische Propylenterpolymer (a) eine in Xylol kalt lösliche (XCS) Menge im Bereich von 3,0 bis unter 20,0 Gew.-%, gemessen nach ISO 16152, 2005, bei 25°C aufweist.

**5.** Polypropylenzusammensetzung gemäß einem der vorhergehenden Ansprüche 1 bis 4, wobei das Plastomer auf Ethylenbasis eine $MFR_2$, bestimmt nach ISO 1133 bei 190°C unter einer Last von 2,16 kg, im Bereich von 3,0 bis 9,0 g/10 min aufweist.

**6.** Polypropylenzusammensetzung gemäß einem der vorhergehenden Ansprüche 1 bis 5, wobei die Zusammensetzung eine in Xylol kalt lösliche (XCS) Menge im Bereich von 15,0 Gew.-% bis unter 35,0 Gew.-%, vorzugsweise im Bereich von 15,0 Gew.-% bis unter 32,0 Gew.-%, gemessen gemäß ISO 16152, 2005, bei 25°C, aufweist.

**7.** Verfahren zur Herstellung der Polypropylenzusammensetzung nach einem der vorhergehenden Ansprüche 1 bis 6, wobei das Verfahren die folgenden Schritte umfasst

(i) Herstellung der Komponente (a), d.h. des statistischen Propylenterpolymers, durch Polymerisation von Propylen, Ethylen und einem $C_4$ bis $C_{10}$ α-Olefin in Gegenwart eines phthalatfreien Ziegler-Natta-Katalysators, wobei das statistische Propylenterpolymer durch ein sequentielles Polymerisationsverfahren hergestellt wird, das mindestens zwei in Reihe geschaltete Reaktoren umfasst, wobei das Verfahren die Schritte umfasst:

a) Polymerisieren in einem ersten Reaktor, der ein Slurry-Reaktor ist, von Propylen, Ethylen und einem Comonomer, ausgewählt aus $C_4$-$C_{10}$ Alpha-Olefin, wobei eine Propylenpolymerfraktion (PPF1) erhalten wird, die ein Propylenterpolymer nach Anspruch 1 ist
b) Überführen der Propylenpolymerfraktion (PPF1) und nicht umgesetzter Comonomere aus dem Reaktor (R-1) in einen zweiten Reaktor (R-2), der ein erster Gasphasenreaktor-1 (GPR 1) ist,
c) in dem Gasphasenreaktor-1 (GPR-1) Propylen, Ethylen und ein Comonomer, ausgewählt aus $C_4$-$C_{10}$ Alpha-Olefin, in Gegenwart der Propylenpolymerfraktion (PPF1) polymerisiert werden, wobei eine Propylenpolymerfraktion (PPF2) erhalten wird, die ein Propylenterpolymer wie in Anspruch 1 definiert ist, wobei die Propylenpolymerfraktion (PPF2) und die Propylenpolymerfraktion (PPF1) das statistische Propylenterpolymer (a) gemäß Anspruch 1 bilden,
d) Gewinnen des statistischen Propylenterpolymers (a) nach Anspruch 1,

(ii) Mischen des Propylenterpolymers (a) mit einem Plastomer auf Ethylenbasis (b), gegebenenfalls in Gegenwart eines oder mehrerer Additive, um ein Gemisch der Komponenten (a) und (b) zu erhalten, und
(iii) Extrudieren dieser Mischung, um die Polypropylenzusammensetzung zu erhalten, die das Gemisch (A) aus den Komponenten (a) und (b) umfasst.

**8.** Verfahren gemäß Anspruch 7, wobei der erste Reaktor ein Schlaufenreaktor (R-1) ist.

**9.** Verwendung einer Polypropylenzusammensetzung nach einem der Ansprüche 1 bis 6 oder hergestellt nach Anspruch 7 oder 8 zur Herstellung von Gegenständen.

**10.** Gegenstand, umfassend die Polypropylenzusammensetzung nach einem der Ansprüche 1 bis 6 oder hergestellt nach Anspruch 7 oder 8.

**11.** Gegenstand gemäß Anspruch 10, wobei der Gegenstand eine nicht orientierte Folie ist, die mehr als 90 Gew.-% der Zusammensetzung nach einem der vorhergehenden Ansprüche 1 bis 6 enthält oder nach Anspruch 7 oder 8 hergestellt ist, wobei die Folie eine gegossene Folie oder eine Blasfolie ist.

**12.** Folie gemäß Anspruch 11, **dadurch gekennzeichnet, dass** die Folie eine Siegelbeginntemperatur, bestimmt nach Anspruch 1, im Bereich von 90°C bis unter 102°C, vorzugsweise im Bereich von 92°C bis 100°C, aufweist.

**13.** Folie gemäß Anspruch 11 oder 12, **dadurch gekennzeichnet, dass** die Folie eine Trübung nach ASTM D1003-00, bestimmt an einer 50 $\mu$m gegossenen Folie, von unter 4,0 %, vorzugsweise unter 3,0 %, aufweist.

**14.** Folie gemäß einem der vorhergehenden Ansprüche 11 bis 13, wobei die Folie eine Heißklebekraft, bestimmt an einer 50-pm-Gießfolie nach ASTM F1921-12, Methode B, im Bereich von 1,5 bis 6,0 N, vorzugsweise im Bereich von 1,8 bis 5,5 N, aufweist.

**Revendications**

**1.** Composition de polypropylène comprenant

A) un mélange de

(a) 75,0 à 95,0 % en poids, sur la base du mélange, d'un terpolymère de propylène aléatoire comprenant

(i) des unités de comonomères dérivées de l'éthylène dans une proportion de 1,0 à 2,5 % en poids et
(ii) des unités de comonomères dérivées d'une $\alpha$-oléfine en C$_4$ à C$_{10}$ dans une proportion de 5,0 à 15,0 % en poids,

moyennant quoi le terpolymère de propylène aléatoire a un MFR$_2$ déterminé à 230° C sous une charge de 2,16 kg selon la norme ISO 1133 dans une plage de 0,5 à 20,0 g/10 min, et dans laquelle le terpolymère de propylène aléatoire est un mélange binaire comprenant deux fractions de polymère de propylène PPF1 et PPF2 en quantités spécifiques :

a') 50,0 % ou moins en poids de la fraction de polymère de propylène PPF1 étant un terpolymère de propylène comprenant des monomères de propylène, 0,1 à 1,2 % en poids déterminé par spectroscopie RMN quantitative $^{13}$C{$^1$H} comonomère d'éthylène et 2,0 à 15,0 % en poids déterminés par spectroscopie RMN quantitative $^{13}$C{$^1$H} d'un comonomère choisi parmi l'alpha-oléfine en C à C$_{10}$
et
b') 50,0 % ou plus en poids de la fraction de polymère de propylène PPF2 étant un terpolymère de propylène comprenant des monomères de propylène, 1,0 à 3,0 % en poids calculés sur la base de la spectroscopie RMN quantitative $^{13}$C{$^1$H} de comonomère d'éthylène et 2,0 à 15,0 % en poids calculés sur la base de la spectroscopie RMN quantitative $^{13}$C{$^1$H} d'un comonomère choisi parmi l'alpha-oléfine en C à C$_{10}$,

moyennant quoi la fraction de terpolymère PPF1 a une teneur en éthylène plus faible que la fraction de terpolymère PPF2 ; et

(b) 5,0 à 25,0 % en poids, sur la base du mélange, d'un plastomère à base d'éthylène ayant une densité selon la norme ISO 1183 de 0,850 g/cm$^3$ à 0,915 g/cm$^3$ et un MFR2 déterminé selon la norme ISO 1133 à 190 °C sous une charge de 2,16 kg dans la plage de 2,0 à 10,0 g/10 min,

et facultativement un ou plusieurs additifs dans une quantité totale de 0,0 à 5,0 % en poids, sur la base de la composition, les quantités de mélange (A) et d'additif(s) s'additionnant jusqu'à 100 % en poids pour la composition,
dans laquelle la composition de polypropylène a

i. une température de fusion (Tm) dans la plage de > 133 à 160 °C, déterminée par DSC selon la norme ISO 11357,
ii. une température d'initiation de scellement (SIT), mesurée sur un film coulé de 50 $\mu$m, dans la plage de 90 à < 102 °C, la température d'initiation de scellement (SIT) étant déterminée selon la norme ASTM F1921-12 modifiée comme suit :

o la température d'initiation de scellement (SIT) à chaud est la température de scellement à laquelle une force de scellement de $\geq$ 5 N est obtenue,
o largeur de l'échantillon : 25 mm,

o pression de scellement : 0,67 N/mm$^2$,
o durée de scellement : 1 s,
o durée de refroidissement : 30 s,
o taux de séparation des pinces : 42 mm/s,
o température de départ : 80 °C,
o température finale : 150 °C,
o intervalle de température de scellement (incréments) : 5 °C,
o les échantillons sont scellés A à A à chaque température de la mâchoire de scellement (barre de scellement) et la force de scellement est déterminée à chaque étape, et par conséquent

iii. Tm et SIT satisfaisant à l'équation :

```
Delta = Tm - SIT,
```

dans laquelle Delta se situe dans la plage de 33 à 50 °C.

2. Composition de polypropylène selon la revendication 1, dans laquelle le terpolymère de propylène aléatoire est un mélange binaire comprenant deux fractions de polymère de propylène PPF1 et PPF2.

3. Composition de polypropylène selon la revendication 1 ou 2, dans laquelle le terpolymère de propylène aléatoire (a) a une température de fusion Tm mesurée par DSC selon la norme ISO 11357 dans la plage égal ou supérieur de 130 °C à 160 °C, de préférence dans la plage de 130 °C à 145 °C.

4. Composition de polypropylène selon l'une des revendications 1 à 3 précédentes, dans laquelle le terpolymère de propylène aléatoire (a) a une teneur en xylène soluble à froid (XCS) dans la plage de 3,0 à moins de 20,0 % en poids, mesurée selon la norme ISO 16152, 2005, à 25 °C.

5. Composition de polypropylène selon l'une des revendications 1 à 4 précédentes, dans laquelle la plastomère à base d'éthylène a un MFR$_2$ déterminé selon la norme ISO 1133 à 190 °C sous une charge de 2,16 kg dans la plage de 3,0 à 9,0 g/10 min.

6. Composition de polypropylène selon l'une des revendications 1 à 5 précédentes, dans laquelle la composition a une teneur en xylène soluble à froid (XCS) dans la plage de 15,0 % en poids à moins de 35,0 % en poids, de préférence dans la plage de 15,0 % en poids à moins de 32,0 % en poids, mesurée selon la norme ISO 16152, 2005, à 25 °C.

7. Procédé de préparation de la composition de polypropylène selon l'une des revendications 1 à 6 précédentes, le procédé comprenant les étapes consistant à

(i) préparer le composant (a), c'est-à-dire le terpolymère de propylène aléatoire en polymérisant le propylène, l'éthylène et une α-oléfine en C$_4$ à C$_{10}$ en présence d'un catalyseur Ziegler-Natta sans phtalate, dans laquelle ledit terpolymère de propylène aléatoire est préparé par un procédé de polymérisation séquentiel comprenant au moins deux réacteurs connectés en série, ledit procédé comprenant les étapes consistant à :

a) polymériser dans un premier réacteur en suspension du propylène, de l'éthylène et un comonomère choisi parmi l'alpha-oléfine en C$_4$ à C$_{10}$, pour obtenir une fraction de polymère de propylène (PPF1), étant un terpolymère de propylène tel que défini dans la revendication 1
b) transférer la fraction de polymère de propylène (PPF1) et les comonomères n'ayant pas réagi du réacteur (R-1) dans un second réacteur (R-2) étant un premier réacteur en phase gazeuse-1 (GPR 1),
c) dans le réacteur en phase gazeuse-1 (GPR-1), le propylène, l'éthylène et un comonomère choisi parmi l'alpha-oléfine en C$_4$ à C$_{10}$ sont polymérisés en présence de la fraction de polymère de propylène (PPF1), pour obtenir une fraction de polymère de propylène (PPF2), étant un terpolymère de propylène tel que défini dans la revendication 1, ladite fraction de polymère de propylène (PPF2) et la fraction de polymère de propylène (PPF1) formant le terpolymère de propylène aléatoire (a) selon la revendication 1,
d) récupérer le terpolymère de propylène aléatoire (a) selon la revendication 1,

(ii) mélanger ledit terpolymère de propylène (a) avec un plastomère à base d'éthylène (b), facultativement en présence d'un ou plusieurs additifs, pour obtenir un mélange des composants (a) et (b), et

(iii) extruder ledit mélange pour obtenir la composition de polypropylène comprenant le mélange (A) du composant (a) et (b).

8. Procédé selon la revendication 7, dans lequel le premier réacteur est un réacteur à boucles (R-1).

9. Utilisation d'une composition de polypropylène selon les revendications 1 à 6 ou préparée selon la revendication 7 ou 8 pour la production d'articles.

10. Article comprenant la composition de polypropylène selon l'une des revendications 1 à 6 ou préparée selon la revendication 7 ou 8.

11. Article selon la revendication 10, dans lequel l'article est un film non orienté comprenant plus de 90 % en poids de la composition selon l'une des revendications 1 à 6 ou préparée selon la revendication 7 ou 8, dans lequel le film est un film coulé ou un film soufflé.

12. Film selon la revendication 11, dans lequel le film a une température d'initiation de scellement, déterminée tel que défini dans la revendication 1, dans la plage de 90 °C à moins de 102 °C, de préférence dans la plage de 92 °C à 100 °C.

13. Film selon les revendications 11 ou 12, dans lequel le film a un voile selon la norme ASTM D1003-00 déterminé sur un film coulé de 50 $\mu$m de moins de 4,0 %, de préférence moins de 3,0 %.

14. Film selon l'une des revendications 11 à 13, dans lequel le film a une force d'adhérence à chaud déterminée sur un film coulé de 50 $\mu$m selon la norme ASTM F1921-12, Méthode B, dans la plage de 1,5 à 6,0 N, de préférence dans la plage de 1,8 à 5,5 N.

# EP 3 917 978 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050142367 A
- WO 2016091923 A
- EP 3031849 A
- EP 3447088 A
- US 2001000254 A
- WO 2018069263 A
- EP 3261838 A
- US 2016312018 A
- US 2018155475 A
- EP 0887379 A
- WO 9212182 A
- WO 2004000899 A
- WO 2004111095 A
- WO 9924478 A
- WO 9924479 A
- WO 0068315 A
- WO 2012007430 A
- EP 2610271 A
- EP 261027 A
- EP 2610272 A
- WO 006831 A

### Non-patent literature cited in the description

- *CHEMICAL ABSTRACTS,* 112-84-5
- *CHEMICAL ABSTRACTS,* 301-02-0
- *CHEMICAL ABSTRACTS,* 124-26-5
- *CHEMICAL ABSTRACTS,* 6683-19-8
- *CHEMICAL ABSTRACTS,* 31570-04-4
- *CHEMICAL ABSTRACTS,* 693- 36-7
- *CHEMICAL ABSTRACTS,* 11097-59-9
- *CHEMICAL ABSTRACTS,* 1592-23-0
- *CHEMICAL ABSTRACTS,* 557-05-1
- *CHEMICAL ABSTRACTS,* 60676-86-0
- *CHEMICAL ABSTRACTS,* 7631-86-9
- *CHEMICAL ABSTRACTS,* 112926-00-8
- *CHEMICAL ABSTRACTS,* 1318-74-7
- *CHEMICAL ABSTRACTS,* 1344-00-9
- *CHEMICAL ABSTRACTS,* 92704-41-1
- *CHEMICAL ABSTRACTS,* 1327-36-2
- *CHEMICAL ABSTRACTS,* 1344-95-2
- *CHEMICAL ABSTRACTS,* 1344-01-0
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- *CHEMICAL ABSTRACTS,* 97593-29-8
- *CHEMICAL ABSTRACTS,* 71786-60-2
- *CHEMICAL ABSTRACTS,* 204-393-1
- **KLIMKE, K. ; PARKINSON, M ; PIEL, C ; KAMINSKY, W. ; SPIESS, H.W ; WILHELM, M.** *Macromol. Chem. Phys.,* 2006, vol. 207, 382
- **PARKINSON, M. ; KLIMKE, K. ; SPIESS, H.W ; WILHELM, M.** *Macromol. Chem. Phys.,* 2007, vol. 208, 2128
- **POLLARD, M ; KLIMKE, K. ; GRAF, R. ; SPIESS, H.W. ; WILHELM, M ; SPERBER, O. ; PIEL, C. ; KAMINSKY, W.** *Macromolecules,* 2004, vol. 37, 813
- **FILIP, X ; TRIPON, C ; FILIP, C.** *J. Mag. Resn.,* 2005, vol. 176, 239
- **GRIFFIN, J.M ; TRIPON, C ; SAMOSON, A. ; FILIP, C ; BROWN, S.P.** *Mag. Res. in Chem.,* 2007, vol. 45, S1-S198
- **CASTIGNOLLES, P. ; GRAF, R. ; PARKINSON, M ; WILHELM, M. ; GABORIEAU, M.** *Polymer,* 2009, vol. 50, 2373
- **RESCONI, L ; CAVALLO, L ; FAIT, A ; PIEMONTESI, F.** *Chem. Rev.,* 2000, vol. 100, 1253